# EUROPEAN PATENT APPLICATION

(11) **EP 4 366 376 A1**
(43) Date of publication of application: **08.05.2024**
(21) Application number: 22831645.1
(22) Date of filing: 09.06.2022
(51) Int. Cl.: H04W 36/00

(54) **HANDOVER METHOD AND APPARATUS, NETWORK DEVICE AND RELAY TERMINAL**

(30) Priority: 28.06.2021 CN 202110720740
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2022/097850
(87) International publication number: WO 2023/273824

(57) **Abstract**

A handover method, a handover device, a network device and a relay terminal are provided. The method includes: sending, by a source network device, a handover request message for a first terminal to a target network device through an interface between network devices; wherein the handover request message comprises identifications of target relay terminals of the target network device.

## Description

### CROSS REFERENCE OF RELATED APPLICATION

The present disclosure claims a priority of Chinese patent disclosure No. 202110720740.2 filed on June 28, 2021, which is incorporated herein by reference in its entirety.

### TECHNICAL FIELD

The present disclosure relates to the field of communication technology, and in particular, to a handover method, a handover device, a network device and a relay terminal.

### BACKGROUND

In the related art, in order to expand network coverage, a user equipment (User Equipment, UE) to network relay (UE-to-Network Relay) is introduced. The relay itself can be a terminal with relay functionality. For UE-to-Network Relay, the interface between the relay UE and the network uses the Uu interface, and the interface between the relay terminal and the remote UE (i.e., the relayed terminal) uses the PC5 interface (also called direct communication interface, described on the protocol as Sidelink, SL). The link between the relay and the network may be called a backhaul link for the relayed UE.

For handovers in relay scenarios, the current protocol only supports switching from a direct connection to an indirect connection or from an indirect connection to a direct connection within a base station, and does not support cross-base station handovers. However, in actual scenarios, the serving base station is likely to be changed during the movement of the UE. Moreover, when the serving base station is changed, the serving relay is likely to be changed at the same time. Therefore, in the cross-base station movement scenario, how to enable the UE to perform a handover from the source base station to the target relay of the target base station is an urgent problem to be solved.

### SUMMARY

This disclosure is to provide a handover method, a handover device, a network device and a relay terminal to solve the problem of how the terminal performs a cross-base station handover to the target relay of the target base station in the existing relay scenario.

In order to achieve the above objectives, embodiments of the present disclosure provide a handover method, including:
sending, by a source network device, a handover request message for a first terminal to a target network device through an interface between network devices; where the handover request message includes identifications of target relay terminals of the target network device.

Optionally, subsequent to the sending the handover request message for the first terminal to the target network device, the method further includes:
receiving a handover request acknowledgement message sent by the target network device, where the handover request acknowledgement message includes at least one of the following information:
an identification of a target relay terminal;
configuration information of a first bearer;
configuration information of a second bearer;
a first mapping relationship between the first bearer and the second bearer; or
a terminal identification, where the terminal identification is allocated by the target relay terminal to the first terminal, or is allocated by the target network device to the first terminal;
where the first bearer is a direct communication interface bearer between the first terminal and the target relay terminal, and the second bearer is an end-to-end bearer between the first terminal and the target network device.

Optionally, the handover request acknowledgement message is sent by the target network device after receiving a first response message sent by the target relay terminal, and the first response message is configured to indicate that the target relay terminal is able to provide relay services for the first terminal.

Optionally, the terminal identification is used in a relay-related adaptation layer after a terminal accesses the target relay terminal.

Optionally, subsequent to the receiving the handover request acknowledgement message sent by the target network device, the method further includes:
sending a first radio resource control (RRC) reconfiguration message to the first terminal, where the first RRC reconfiguration message is configured to trigger the first terminal to initiate a handover process, and the first RRC reconfiguration message carries the identification of the target relay terminal.

Optionally, subsequent to the receiving the handover request acknowledgement message sent by the target network device, the method further includes:
when the first terminal is connected to a source relay terminal, sending a second RRC reconfiguration message to the source relay terminal, where the second RRC reconfiguration message triggers the source relay terminal to perform at least one of the following:
releasing a direct communication interface connection with the first terminal;
releasing a backhaul link bearer of a Uu interface related only to the first terminal; or
modifying a backhaul link bearer of a Uu interface related to the first terminal.

Optionally, the method further includes:
sending, by a centralized unit-control plane (CU-CP) of the source network device, through an interface between the CU-CP and a centralized unit-user plane (CU-UP), a bearer context release message to the centralized unit-user plane of the source network device serving the first terminal, where the bearer context release message includes terminal identification of the first terminal.

Optionally, the method further includes:
sending, by a CU-CP of the source network device, through an interface between the CU-CP and a Distribute Unit (DU), a terminal context release message to the DU of the source network device serving the first terminal, where the terminal context release message includes at least one of the following information:
a terminal identification of the first terminal;
an identification of a source relay terminal corresponding to the first terminal.

In order to achieve the above objectives, embodiments of the present disclosure provide a handover method, including:
receiving, by a target network device, a handover request message for a first terminal sent by a source network device, through an interface between network devices, where the handover request message includes identifications of target relay terminals of the target network device.

Optionally, subsequent to the receiving the handover request message for the first terminal sent by the source network device, the method further includes:
sending a first message to the target relay terminals, where the first message includes at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
where the first bearer is a direct communication interface bearer between the first terminal and the target relay terminal, and the second bearer is an end-to-end bearer between the first terminal and the target network device, and the third bearer is a Uu interface bearer between the target relay terminals and the target network device.

Optionally, subsequent to the sending the first message to the target relay terminals, the method further includes:
receiving a first response message corresponding to the first message sent by the target relay terminal, where the first response message is configured to indicate that the target relay terminal is able to provide relay services for the first terminal.

Optionally, the first response message includes terminal identification allocated by the target relay terminals to the first terminal.

Optionally, subsequent to the receiving the first response message corresponding to the first message sent by the target relay terminal, the method further includes:
sending to a handover request acknowledgement message to the source network device, where the handover request acknowledgement message includes at least one of the following information:
an identification of the target relay terminal;
configuration information of a first bearer;
configuration information of a second bearer;
a first mapping relationship between the first bearer and the second bearer; or
a terminal identification, where the terminal identification is allocated by the target relay terminal to the first terminal, or is allocated by the target network device to the first terminal;
where the first bearer is a direct communication interface bearer between the first terminal and the target relay terminal, and the second bearer is an end-to-end bearer between the first terminal and the target network device.

Optionally, the terminal identification is used in a relay-related adaptation layer after a terminal accesses the target relay terminal.

Optionally, prior to the sending the first message to the target relay terminal, the method further includes:
sending, by a centralized unit-control plane (CU-CP) of the target network device, the bearer context establishment request message to the centralized unit-user plane of the target network device serving the target relay terminal through an interface between the CU-CP and a centralized unit-user plane (CU-UP),
where the bearer context establishment request message includes at least one of the following information:
   identification of the target relay terminal;
   configuration information of the second bearer;
   terminal identification of the first terminal;
   configuration information of the third bearer;
   where the second bearer is an end-to-end bearer between the first terminal and the target network device, and the third bearer is a Uu interface bearer between the target relay terminal and the target network device.

Optionally, prior to the sending the first message to the target relay terminal, the method further includes:
sending, by a centralized unit-control plane (CU-CP) of the target network device, a terminal context establishment request message to a distribution unit (DU) of the target network device through an interface between the CU-CP and the DU, where the terminal context establishment request message includes at least one of the following information:
identification of the target relay terminal;
terminal identification of the first terminal;
an association relationship between the target relay terminal and the source relay terminal.

In order to achieve the above objectives, embodiments of the present disclosure provide a handover method, including:
receiving, by a target relay terminal, a first message sent by a target network device, where the first message is sent by the target network device after receiving a handover request message for the first terminal sent by a source network device, where the handover request message includes identifications of target relay terminals, and the first message includes at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
where the first bearer is a direct communication interface bearer between the first terminal and the target relay terminal, and the second bearer is an end-to-end bearer between the first terminal and the target network device, and the third bearer is a Uu interface bearer between the target relay terminal and the target network device.

Optionally, the method further includes:
sending a first response message to the target network device, where the first response message is configured to indicate that the target relay terminal is able to provide relay services for the first terminal.

In order to achieve the above objectives, embodiments of the present disclosure provide a network device, where the network device is a source network device and includes: a memory, a transceiver and a processor: the memory is configured to store program instructions; the transceiver is configured to send and receive data under a control of the processor; the processor is configured to read the program instructions in the memory to perform:
sending a handover request message for a first terminal to a target network device through an interface between network devices, where the handover request message includes identifications of target relay terminals of the target network device.

Optionally, the transceiver is further configured to perform:
receiving a handover request acknowledgement message sent by the target network device, where the handover request acknowledgement message includes at least one of the following information:
an identification of a target relay terminal;
configuration information of a first bearer;
configuration information of a second bearer;
a first mapping relationship between the first bearer and the second bearer; or
a terminal identification, where the terminal identification is allocated by the target relay terminal to the first terminal, or is allocated by the target network device to the first terminal;
where the first bearer is a direct communication interface bearer between the first terminal and the target relay terminal, and the second bearer is an end-to-end bearer between the first terminal and the target network device.

Optionally, the handover request acknowledgement message is sent by the target network device after receiving a first response message sent by the target relay terminal, and the first response message is configured to indicate that the target relay terminal is able to provide relay services for the first terminal.

Optionally, the terminal identification is used in a relay-related adaptation layer after a terminal accesses the target relay terminal.

Optionally, the transceiver is further configured to perform:
sending a first radio resource control (RRC) reconfiguration message to the first terminal, where the first RRC reconfiguration message is configured to trigger the first terminal to initiate a handover process, and the first RRC reconfiguration message carries the identification of the target relay terminal.

Optionally, the transceiver is further configured to perform:
when the first terminal is connected to a source relay terminal, sending a second RRC reconfiguration message to the source relay terminal, where the second RRC reconfiguration message triggers the source relay terminal to perform at least one of the following:
releasing a direct communication interface connection with the first terminal;
releasing a backhaul link bearer of a Uu interface related only to the first terminal; or
modifying a backhaul link bearer of a Uu interface related to the first terminal.

Optionally, a centralized unit-control plane (CU-CP) of the source network device sends, through an interface between the CU-CP and a centralized unit-user plane (CU-UP), a bearer context release message to the centralized unit-user plane of the source network device serving the first terminal, where the bearer context release message includes terminal identification of the first terminal.

Optionally, a CU-CP of the source network device sends, through an interface between the CU-CP and a Distribute Unit (DU), a terminal context release message to the DU of the source network device serving the first terminal, where the terminal context release message includes at least one of the following information:
terminal identification of the first terminal;
identification of a source relay terminal corresponding to the first terminal.

In order to achieve the above objectives, embodiments of the present disclosure provide a handover apparatus, including:
a first sending unit, configured to send a handover request message for a first terminal to a target network device through an interface between network devices; where the handover request message includes identification of a target relay terminal of the target network device.

Optionally, the handover device further includes:
a first receiving unit, configured to receive a handover request acknowledgement message sent by the target network device, where the handover request acknowledgement message includes at least one of the following information:
identification of the target relay terminal;
configuration information of a first bearer;
configuration information of a second bearer;
a first mapping relationship between the first bearer and the second bearer; or
a terminal identification, where the terminal identification is allocated by the target relay terminal to the first terminal, or is allocated by the target network device to the first terminal;
where the first bearer is a direct communication interface bearer between the first terminal and the target relay terminal, and the second bearer is an end-to-end bearer between the first terminal and the target network device.

Optionally, the handover request acknowledgement message is sent by the target network device after receiving a first response message sent by the target relay terminal, and the first response message is configured to indicate that the target relay terminal is able to provide relay services for the first terminal.

Optionally, the terminal identification is used in a relay-related adaptation layer after a terminal accesses the target relay terminal.

Optionally, the handover device further includes:
a second sending unit, configured to send a first radio resource control (RRC) reconfiguration message to the first terminal, where the first RRC reconfiguration message is configured to trigger the first terminal to initiate a handover process, and the first RRC reconfiguration message carries the identification of the target relay terminal.

Optionally, the handover device further includes:
a third sending unit configured to, when the first terminal is connected to a source relay terminal, send a second RRC reconfiguration message to the source relay terminal, where the second RRC reconfiguration message triggers the source relay terminal to perform at least one of the following:
releasing a direct communication interface connection with the first terminal;
releasing a backhaul link bearer of a Uu interface related only to the first terminal; or
modifying a backhaul link bearer of a Uu interface related to the first terminal.

Optionally, a centralized unit-control plane (CU-CP) of the source network device sends, through an interface between the CU-CP and a centralized unit-user plane (CU-UP), a bearer context release message to the centralized unit-user plane of the source network device serving the first terminal, where the bearer context release message includes terminal identification of the first terminal.

Optionally, a CU-CP of the source network device sends, through an interface between the CU-CP and a Distribute Unit (DU), a terminal context release message to the DU of the source network device serving the first terminal, where the terminal context release message includes at least one of the following information:
terminal identification of the first terminal;
identification of a source relay terminal corresponding to the first terminal.

In order to achieve the above objectives, embodiments of the present disclosure provide a processor-readable storage medium, where the processor-readable storage medium stores a computer program, the computer program is executed by the processor to perform the handover method hereinabove.

In order to achieve the above objectives, embodiments of the present disclosure provide a network device, where the network device is a target network device and includes: a memory, a transceiver and a processor: the memory is configured to store program instructions; the transceiver is configured to send and receive data under a control of the processor; the processor is configured to read the program instructions in the memory to perform:
receiving a handover request message for a first terminal sent by a source network device, through an interface between network devices, where the handover request message includes identifications of target relay terminals of the target network device.

Optionally, the transceiver is further configured to perform:
sending a first message to the target relay terminals, where the first message includes at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
where the first bearer is a direct communication interface bearer between the first terminal and the target relay terminal, and the second bearer is an end-to-end bearer between the first terminal and the target network device, and the third bearer is a Uu interface bearer between the target relay terminal and the target network device.

Optionally, the transceiver is further configured to perform:
receiving a first response message corresponding to the first message sent by the target relay terminal, where the first response message is configured to indicate that the target relay terminal is able to provide relay services for the first terminal.

Optionally, the first response message includes terminal identification allocated by the target relay terminal to the first terminal.

Optionally, the transceiver is further configured to perform:
sending to a handover request acknowledgement message to the source network device, where the handover request acknowledgement message includes at least one of the following information:
an identification of the target relay terminal;
configuration information of a first bearer;
configuration information of a second bearer;
a first mapping relationship between the first bearer and the second bearer; or
a terminal identification, where the terminal identification is allocated by the target relay terminal to the first terminal, or is allocated by the target network device to the first terminal;
where the first bearer is a direct communication interface bearer between the first terminal and the target relay terminal, and the second bearer is an end-to-end bearer between the first terminal and the target network device.

Optionally, the terminal identification is used in a relay-related adaptation layer after a terminal accesses the target relay terminal.

Optionally, a centralized unit-control plane (CU-CP) of the target network device sends, the bearer context establishment request message to the centralized unit-user plane of the target network device serving the target relay terminal through an interface between the CU-CP and a centralized unit-user plane (CU-UP),
where the bearer context establishment request message includes at least one of the following information:
identifications of target relay terminals;
configuration information of the second bearer;
a terminal identification of the first terminal;
configuration information of the third bearer;
where the second bearer is an end-to-end bearer between the first terminal and the target network device, and the third bearer is a Uu interface bearer between the target relay terminal and the target network device.

Optionally, a centralized unit-control plane (CU-CP) of the target network device sends, a terminal context establishment request message to a distribution unit (DU) of the target network device through an interface between the CU-CP and the DU, where the terminal context establishment request message includes at least one of the following information:
identifications of the target relay terminals;
a terminal identification of the first terminal;
an association relationship between the target relay terminal and the source relay terminal.

In order to achieve the above objectives, embodiments of the present disclosure provide a handover apparatus, including:
a second receiving unit is configured to, receive a handover request message for a first terminal sent by a source network device, through an interface between network devices, where the handover request message includes identifications of target relay terminals of the target network device.

Optionally, the handover device further includes:
a fourth sending unit configured to send a first message to the target relay terminals, where the first message includes at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
where the first bearer is a direct communication interface bearer between the first terminal and the target relay terminals, and the second bearer is an end-to-end bearer between the first terminal and the target network device, and the third bearer is a Uu interface bearer between the target relay terminals and the target network device.

Optionally, the handover device further includes:
a third receiving unit configured to receive a first response message corresponding to the first message sent by a target relay terminal, where the first response message is configured to indicate that the target relay terminal is able to provide relay services for the first terminal.

Optionally, the first response message includes a terminal identification allocated by the target relay terminal to the first terminal.

Optionally, the handover device further includes:
a fifth sending unit, configured to send to a handover request acknowledgement message to the source network device, where the handover request acknowledgement message includes at least one of the following information:
an identification of the target relay terminal;
configuration information of a first bearer;
configuration information of a second bearer;
a first mapping relationship between the first bearer and the second bearer; or
a terminal identification, where the terminal identification is allocated by the target relay terminal to the first terminal, or is allocated by the target network device to the first terminal;
where the first bearer is a direct communication interface bearer between the first terminal and the target relay terminal, and the second bearer is an end-to-end bearer between the first terminal and the target network device.

Optionally, the terminal identification is used in a relay-related adaptation layer after a terminal accesses the target relay terminal.

Optionally, a centralized unit-control plane (CU-CP) of the target network device sends, the bearer context establishment request message to the centralized unit-user plane of the target network device serving the target relay terminal through an interface between the CU-CP and a centralized unit-user plane (CU-UP),
where the bearer context establishment request message includes at least one of the following information:
identifications of the target relay terminals;
configuration information of the second bearer;
a terminal identification of the first terminal;
configuration information of the third bearer;
where the second bearer is an end-to-end bearer between the first terminal and the target network device, and the third bearer is a Uu interface bearer between the target relay terminal and the target network device.

Optionally, a centralized unit-control plane (CU-CP) of the target network device sends, a terminal context establishment request message to a distribution unit (DU) of the target network device through an interface between the CU-CP and the DU, where the terminal context establishment request message includes at least one of the following information:
identifications of the target relay terminals;
terminal identification of the first terminal;
an association relationship between the target relay terminals and the source relay terminal.

In order to achieve the above objectives, embodiments of the present disclosure provide a processor-readable storage medium, where the processor-readable storage medium stores a computer program, the computer program is executed by the processor to perform the handover method hereinabove.

In order to achieve the above objectives, embodiments of the present disclosure provide a relay terminal, where the relay terminal is a target relay terminal of a target network device, including: a memory, a transceiver and a processor: the memory is configured to store program instructions; the transceiver is configured to send and receive data under a control of the processor; the processor is configured to read the program instructions in the memory to perform:
receiving, through the transceiver, a first message sent by a target network device, where the first message is sent by the target network device after receiving a handover request message for the first terminal sent by a source network device, where the handover request message includes identification of the target relay terminal, and the first message includes at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
where the first bearer is a direct communication interface bearer between the first terminal and the target relay terminal, and the second bearer is an end-to-end bearer between the first terminal and the target network device, and the third bearer is a Uu interface bearer between the target relay terminal and the target network device.

Optionally, the transceiver is further configured to perform:
sending a first response message to the target network device, where the first response message is configured to indicate that the target relay terminal is able to provide relay services for the first terminal.

In order to achieve the above objectives, embodiments of the present disclosure provide a handover apparatus, including:
a fourth receiving unit, configured to receive a first message sent by a target network device, where the first message is sent by the target network device after receiving a handover request message for the first terminal sent by a source network device, where the handover request message includes identification of the target relay terminal, and the first message includes at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
where the first bearer is a direct communication interface bearer between the first terminal and the target relay terminal, and the second bearer is an end-to-end bearer between the first terminal and the target network device, and the third bearer is a Uu interface bearer between the target relay terminal and the target network device.

Optionally, the handover device further includes:
a sixth sending unit, configured to send a first response message to the target network device, where the first response message is configured to indicate that the target relay terminal is able to provide relay services for the first terminal.

The present disclosure has at least the following beneficial effects:

According to the above embodiments of the present disclosure, the source network device sends a handover request message for the first terminal to the target network device through the interface between the network devices, where the handover request message includes identification of a target relay terminal of the target network device. Therefore, it can be ensured that the terminal can directly perform a handover to the target relay terminal of the target network device, thereby better ensuring the continuity of the service.

### BRIEF DESCRIPTION OF THE DRAWINGS

The technical solutions of the embodiments of the present disclosure more clearly, the drawings needed to be used in the description of the embodiments of the present disclosure will be briefly introduced below. Obviously, the drawings in the following description are only some embodiments of the present disclosure, for those of ordinary skill in the art, other drawings can also be obtained based on these drawings without exerting creative labor.
Fig. 1 is a first schematic flowchart of a handover method according to an embodiment of the present disclosure;
Fig. 2 is a schematic view of the Xn and F1 interfaces;
Fig. 3 is a schematic view of the E1 interface;
Fig. 4 is a second schematic flowchart of a handover method according to an embodiment of the present disclosure;
Fig. 5 is a third schematic flowchart of a handover method according to an embodiment of the present disclosure;
Fig. 6 is a fourth schematic flowchart of a handover method according to an embodiment of the present disclosure;
Fig. 7 is a fifth schematic flowchart of a handover method according to an embodiment of the present disclosure;
Fig. 8 is a first structural block view of a network device according to an embodiment of the present disclosure;
Fig. 9 is a first schematic view of modules of a handover apparatus according to an embodiment of the present disclosure;
Fig. 10 is a second structural block view of a network device according to an embodiment of the present disclosure;
Fig. 11 is a second schematic view of modules of a handover apparatus according to an embodiment of the present disclosure;
Fig. 12 is a structural block view of a relay terminal according to an embodiment of the present disclosure; and
Fig. 13 is a third schematic view of modules of a handover apparatus according to an embodiment of the present disclosure.

### DETAILED DESCRIPTION

In the present disclosure, the term "and/or" describes the association relationship of associated objects, indicating that there can be three relationships, for example, A and/or B, which can mean: A exists alone, A and B exist simultaneously, and B exists alone. The character "/" generally indicates that the related objects are in an "or" relationship.

In the embodiments of the present disclosure, the term "plurality" refers to two or more than two, and other quantifiers are similar to it.

The embodiments of the present disclosure will be clearly and completely described below with reference to the accompanying drawings in the embodiments of the present disclosure. Obviously, the described embodiments are only some of the embodiments of the present disclosure, not all of them. Based on the embodiments in this disclosure, all other embodiments obtained by those of ordinary skill in the art without creative efforts fall within the scope of protection of this disclosure.

It should be noted that bearers in relay scenarios are divided into three categories:
1) Direct communication interface bearer, that is, the bearer between the remote terminal and the relay terminal;
2) The end-to-end bearer between the remote terminal and the network device, that is, the end-to-end bearer established between the remote terminal and the network device;
3) The remote terminal carries the backhaul link of the Uu interface, that is, the bearer configured to carry remote data between the relay terminal and the network device.

In the relay scenario, connections are divided into two categories:
1. Direct connection: The direct connection of the terminal to the network device is called direct connection;
2. Indirect connection: The terminal is connected to the network device through a relay terminal, which is called an indirect connection.

The embodiments of the present disclosure provide a handover method and a device, where the method and the device are based on the same application concept. Since the methods and devices solve problems in similar principles, the implementation of the device and the method can be referred to each other, and repeated descriptions will not be repeated.

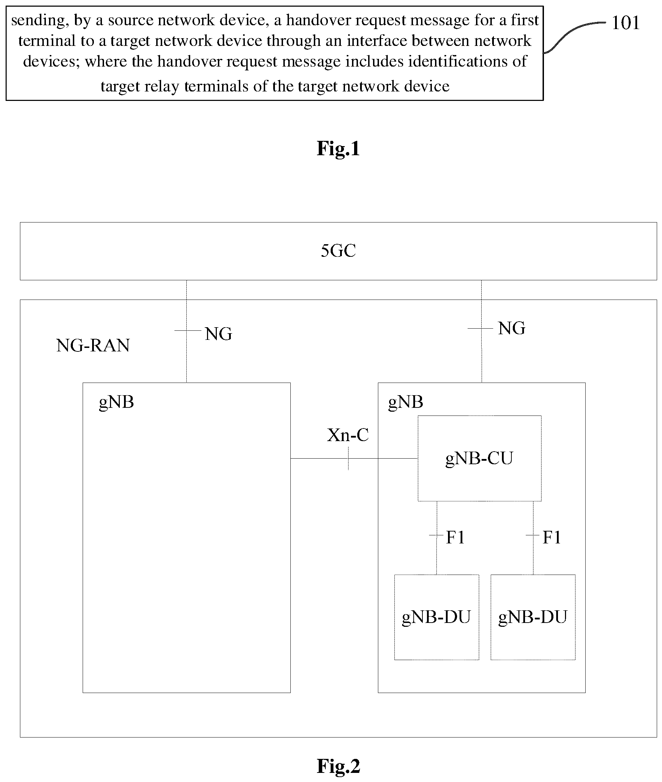

As shown in Fig. 1, it is a schematic flowchart of a handover method provided by an embodiment of the present disclosure. The method is applied to a source network device and includes:

Step 101: sending, by a source network device, a handover request message for a first terminal to a target network device through an interface between network devices; where the handover request message includes identifications of target relay terminals of the target network device;

Here, after the source network device determines that the first terminal needs to perform a handover to the target relay terminal of the target network device by executing a handover decision, it sends a handover request message for the first terminal to the target network device through the interface between the network devices.

It should be noted that how the source network device performs the handover decision depends on the source network device implementation.

Here, the first terminal may be directly connected to the source network device, or may be connected to the source network device through a source relay terminal under the source network device, that is, using an indirect connection with the source network device, which is not specifically limited here.

It should be noted that in one implementation, the first terminal performs a measurement process according to the configuration of the source network device. During the measurement process, a discovery relay (relay discovery) message is obtained, and the relay discovery message carries the information in the target. The identification of the target relay terminal is received, and the identification of the target relay terminal is reported to the source target network device.

Here, the interface between network devices, for 5G, this interface is the Xn interface.

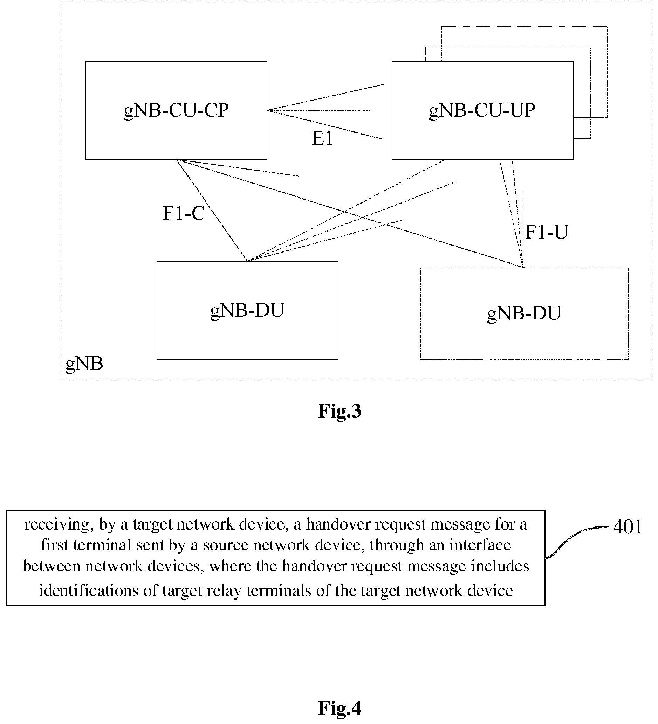

Here, as shown in Fig. 2 and Fig. 3, for the 5G system, the interfaces between network devices include:
Xn interface: the interface between the base station and the base station or between the base station and the CU.

F1 interface: The interface between the Centralized Unit (CU) and the Distributed Unit (DU) of a base station.

E1 interface: The interface between the control plane of the centralized unit (CU-CP) and the user plane of the centralized unit (CU-UP) of a base station.

It should be noted that the handover request message at least includes the identification of the target relay terminal, and its purpose is to facilitate the target network device to make relevant preparations for the first terminal to switch to the target relay terminal, so that the first terminal can subsequently switch directly to the target. The target relay terminal under the network device.

Here, the identification of the target relay terminal may be the target address of the target relay terminal on the direct communication interface or the identification of the relay UE broadcast by the target relay terminal in the relay discovery message.

According to the above handover method in the embodiment of the present disclosure, the source network device sends a handover request message for the first terminal to the target network device through the interface between the network devices, where the handover request message includes identification of a target relay terminal of the target network device. Therefore, it can be ensured that the terminal can directly perform a handover to the target relay terminal of the target network device, thereby better ensuring the continuity of the service.

Optionally, in Step 101, subsequent to the sending the handover request message for the first terminal to the target network device, the method further includes:
receiving a handover request acknowledgement message sent by the target network device, where the handover request acknowledgement message includes at least one of the following information:
an identification of a target relay terminal;
configuration information of a first bearer;
configuration information of a second bearer;
a first mapping relationship between the first bearer and the second bearer; or
a terminal identification, where the terminal identification is allocated by the target relay terminal to the first terminal, or is allocated by the target network device to the first terminal;
where the first bearer is a direct communication interface bearer between the first terminal and the target relay terminal, and the second bearer is an end-to-end bearer between the first terminal and the target network device.

Optionally, the handover request acknowledgement message is sent by the target network device after receiving a first response message sent by the target relay terminal, and the first response message is configured to indicate that the target relay terminal is able to provide relay services for the first terminal.

Optionally, the terminal identification is used in a relay-related adaptation layer after a terminal accesses the target relay terminal.

That is to say, the terminal identification allocated to the first terminal by the target relay terminal or the target network device is terminal identification used in the relay-related adaptation layer after the terminal accesses the target relay terminal.

Here, the first response message may be a Radio Resource Control (RRC) reconfiguration completion message.

Optionally, subsequent to the receiving the handover request acknowledgement message sent by the target network device, the method further includes:
sending a first radio resource control (RRC) reconfiguration message to the first terminal, where the first RRC reconfiguration message is configured to trigger the first terminal to initiate a handover process, and the first RRC reconfiguration message carries the identification of the target relay terminal.

Here, the first RRC reconfiguration message carries the identification of the target relay terminal, and its purpose is to facilitate the subsequent establishment of a direct communication connection between the first terminal and the target relay terminal.

Optionally, subsequent to the receiving the handover request acknowledgement message sent by the target network device, the method further includes:
when the first terminal is connected to a source relay terminal, sending a second RRC reconfiguration message to the source relay terminal, where the second RRC reconfiguration message triggers the source relay terminal to perform at least one of the following:
releasing a direct communication interface connection with the first terminal;
releasing a backhaul link bearer of a Uu interface related only to the first terminal; or
modifying a backhaul link bearer of a Uu interface related to the first terminal.

Optionally, the method of the embodiment of the present disclosure also includes:
sending, by a centralized unit-control plane (CU-CP) of the source network device, through an interface between the CU-CP and a centralized unit-user plane (CU-UP), a bearer context release message to the centralized unit-user plane of the source network device serving the first terminal, where the bearer context release message includes terminal identification of the first terminal.

Here, the source network device adopts a CU/DU separated network architecture, that is, the source network device includes a distribution unit and a centralized unit. The CU-CP of the source network device communicates to the source network device through the interface between CU-CP and CU-UP (such as the E1 interface). The CU-UP of the source network device serving the first terminal sends a bearer context release (BEARER CONTEXT RELEASE) message, where the bearer context release message at least includes terminal identification of the first terminal.

Optionally, the method of the embodiment of the present disclosure also includes:
sending, by a CU-CP of the source network device, through an interface between the CU-CP and a Distribute Unit (DU), a terminal context release message to the DU of the source network device serving the first terminal, where the terminal context release message includes at least one of the following information:
a terminal identification of the first terminal;
an identification of a source relay terminal corresponding to the first terminal.

Here, the source network device adopts a CU/DU separated network architecture, that is, the source network device includes a distribution unit and a centralized unit. The CU-CP of the source network device communicates to the third party through the interface (such as the F1 interface) between the CU-CP and the DU. The DU of a source network device served by a terminal sends an F1 UE CONTEXT RELEASE REQUEST message.

In the handover method of the embodiment of the present disclosure, the source network device sends a handover request message for the first terminal to the target network device through the interface between the network devices, where the handover request message includes identification of the target relay terminal in the target network device. Therefore, the terminal can directly perform a handover to the target relay terminal of the target network device, thereby better ensuring continuity of the service.

As shown in Fig. 4, it is a schematic flowchart of a handover method in an embodiment of the present disclosure. The method is applied to a target network device and includes:
Step 401: receiving, by a target network device, a handover request message for a first terminal sent by a source network device, through an interface between network devices, where the handover request message includes identifications of target relay terminals of the target network device.

Here, the target network device receives a handover request message directed to the first terminal sent by the source network device. The handover request message includes the identification of the target relay terminal of the target network device. The purpose is to facilitate the target network device to switch to the first terminal. The terminal switches to the target relay terminal and makes relevant preparations, so that the first terminal can subsequently perform a handover directly to the target relay terminal of the target network device.

Here, the identification of the target relay terminal may be the target address of the target relay terminal on the direct communication interface or the identification of the relay UE broadcast by the target relay terminal in the relay discovery message.

In the handover method of the embodiment of the present disclosure, the target network device receives a handover request message for the first terminal sent by the source network device through the interface between the network devices, where the handover request message includes identification of a target relay terminal of the target network device. Therefore, it can be ensured that the terminal can directly perform a handover to the target relay terminal of the target network device, thereby better ensuring the continuity of the service.

Optionally, in Step 401, subsequent to the receiving the handover request message for the first terminal sent by the source network device, the method further includes:
sending a first message to the target relay terminal, where the first message includes at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
where the first bearer is a direct communication interface bearer between the first terminal and the target relay terminal, and the second bearer is an end-to-end bearer between the first terminal and the target network device, and the third bearer is a Uu interface bearer between the target relay terminal and the target network device.

Optionally, the first message is an RRC reconfiguration message.

Optionally, after sending the first message to the target relay terminal, the method in the embodiment of the present disclosure further includes:
receiving a first response message corresponding to the first message sent by the target relay terminal, where the first response message is configured to indicate that the target relay terminal is able to provide relay services for the first terminal.

Optionally, the first response message includes terminal identification allocated by the target relay terminal to the first terminal.

Here, the first response message may be an RRC reconfiguration complete message.

Optionally, subsequent to the receiving the first response message corresponding to the first message sent by the target relay terminal, the method further includes:
sending to a handover request acknowledgement message to the source network device, where the handover request acknowledgement message includes at least one of the following information:
identification of the target relay terminal;
configuration information of a first bearer;
configuration information of a second bearer;
a first mapping relationship between the first bearer and the second bearer; or
terminal identification, where the terminal identification is allocated by the target relay terminal to the first terminal, or is allocated by the target network device to the first terminal;
where the first bearer is a direct communication interface bearer between the first terminal and the target relay terminal, and the second bearer is an end-to-end bearer between the first terminal and the target network device.

Optionally, the terminal identification is used in a relay-related adaptation layer after a terminal accesses the target relay terminal.

That is to say, the terminal identification allocated to the first terminal by the target relay terminal or the target network device is terminal identification used in the relay-related adaptation layer after the terminal accesses the target relay terminal.

Optionally, prior to the sending the first message to the target relay terminal, the method further includes:
sending, by a centralized unit-control plane (CU-CP) of the target network device, the bearer context establishment request message to the centralized unit-user plane of the target network device serving the target relay terminal through an interface between the CU-CP and a centralized unit-user plane (CU-UP),
where the bearer context establishment request message includes at least one of the following information:
   identification of the target relay terminal;
   configuration information of the second bearer;
   terminal identification of the first terminal;
   configuration information of the third bearer;
   where the second bearer is an end-to-end bearer between the first terminal and the target network device, and the third bearer is a Uu interface bearer between the target relay terminal and the target network device.

Here, the target network device adopts a CU/DU separated network architecture. The source network device includes a distribution unit and a centralized unit. The CU-CP of the target network device is directed to the target through the interface between CU-CP and CU-UP (such as the E1 interface). The CU-UP of the target network device that relays the terminal service sends a BEARER CONTEXT SETUP REQUEST message.

Optionally, prior to the sending the first message to the target relay terminal, the method further includes:
sending, by a centralized unit-control plane (CU-CP) of the target network device, a terminal context establishment request message to a distribution unit (DU) of the target network device through an interface between the CU-CP and the DU, where the terminal context establishment request message includes at least one of the following information:
identification of the target relay terminal;
terminal identification of the first terminal;
an association relationship between the target relay terminal and the source relay terminal.

Here, the target network device adopts a CU/DU separated network architecture. The source network device includes a distribution unit and a centralized unit. The CU-CP of the target network device passes between the CU-CP and the DU (that is, the DU serving the target relay terminal). The interface (such as the F1 interface) sends the F1 UE CONTEXT Setup REQUEST message to the distribution unit of the target network device.

Here, after the source network device sends an RRC reconfiguration message to the first terminal, triggering the first terminal to initiate a handover process, including releasing the connection with the source network device; the first terminal establishes a direct communication connection with the target relay terminal; after that, the first terminal sends an RRC reconfiguration completion message to the target network device through the target relay terminal. In this way, the first terminal completes the relay connection establishment process under the target network device, and can use the target relay terminal connection for subsequent uplink or downlink data transmission.

In the handover method of the embodiment of the present disclosure, the target network device receives a handover request message for the first terminal sent by the source network device through the interface between the network devices, wherein the handover request message includes identification of a target relay terminal of the target network device. Therefore, it can be ensured that the terminal can directly perform a handover to the target relay terminal of the target network device, thereby better ensuring the continuity of the service.

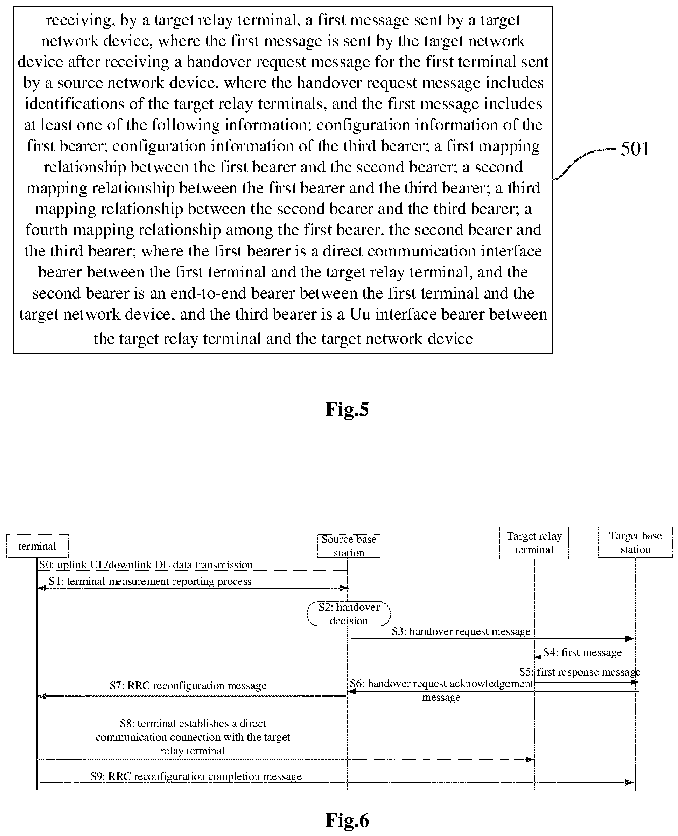

As shown in Fig. 5, it is a schematic flowchart of a handover method in an embodiment of the present disclosure. This method is applied to a relay terminal, which is a target relay terminal of a target network device. The method includes:
Step 501: receiving, by a target relay terminal, a first message sent by a target network device, where the first message is sent by the target network device after receiving a handover request message for the first terminal sent by a source network device, where the handover request message includes identifications of target relay terminal, and the first message includes at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
where the first bearer is a direct communication interface bearer between the first terminal and the target relay terminal, and the second bearer is an end-to-end bearer between the first terminal and the target network device, and the third bearer is a Uu interface bearer between the target relay terminal and the target network device.

Optionally, the first message is an RRC reconfiguration message.

In the handover method of the embodiment of the present disclosure, the target relay terminal receives the first message sent by the target network device. The first message is that the target network device receives the handover request message for the first terminal sent by the source network device. Sent later, the handover request message includes identification of the target relay terminal, and the first message includes at least one of the following information: configuration information of the first bearer; configuration information of the third bearer; a first mapping relationship between one bearer and the second bearer; a second mapping relationship between the first bearer and the third bearer; a third mapping relationship between the second bearer and the third bearer; a fourth mapping relationship between the first bearer, the second bearer and the third bearer; where the first bearer is a direct communication interface bearer between the first terminal and the target relay terminal, and the second bearer is the first End-to-end bearer between the terminal and the target network device, and the third bearer is the Uu interface bearer between the target relay terminal and the target network device. In this way, it can be ensured that the terminal can directly perform a handover to the target relay terminal of the target network device, thereby better ensuring continuity of the service.

Optionally, after receiving the first message sent by the target network device, the method in the embodiment of the present disclosure further includes:
sending a first response message to the target network device, where the first response message is configured to indicate that the target relay terminal is able to provide relay services for the first terminal.

Optionally, the first response message includes terminal identification allocated by the target relay terminal to the first terminal.

Here, the first response message may be an RRC reconfiguration complete message.

The following embodiments will specifically describe the implementation process of the handover method from the perspective of device interaction.

Embodiment 1: the terminal switches from the direct connection under the source network device to the indirect connection under the target network device, as shown in Fig. 6.

In this embodiment, the source network device is the source base station, and the target network device is the target base station. Among them, the specific description of each step is as follows:
S0: The terminal and the source base station perform uplink UL/downlink DL data transmission;
S1: Terminal measurement reporting process;

The terminal performs the measurement process according to the configuration of the source base station. When the measurement reporting triggering conditions are met, the terminal reports the measurement results to the source base station.

It should be noted that the terminal performs the measurement process according to the configuration of the source base station. During the measurement process, it obtains a relay discovery message. The relay discovery message carries the identification of the target relay terminal and adds the target relay discovery message to the target relay terminal. The identification of the relay terminal is reported to the source base station.

S2: The source base station executes handover decision;
How the source base station performs the handover decision depends on the source base station implementation. If the source base station determines that the terminal needs to be switched to the target relay terminal of the target network device, step S3 is executed.

S3 : The source base station sends a handover request message to the target base station;
The source base station performs a handover decision on the terminal. If it is judged that the terminal needs to be handed over to the target relay terminal of the target network device, the source base station sends a handover request message to the target base station through the interbase station interface (for 5G, the interface is the Xn interface). The handover request message needs to carry at least identification of the target relay terminal.

S4: The target base station sends the first message to the target relay terminal;
After receiving the handover request message, the target base station needs to send a first message to the target relay terminal. The first message includes at least one of the following information:
identification of the target relay terminal;
configuration information of the first bearer;
configuration information of the second bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship between the first bearer, the second bearer and the third bearer;

Among them, the first bearer is the direct communication interface bearer between the terminal and the target relay terminal, the second bearer is the end-to-end bearer between the terminal and the target base station, and the third bearer is the Uu interface bearer between the target relay terminal and the target base station.

Specifically, the first message may be an RRC reconfiguration message.

In addition, it should be noted that if the target base station uses a CU/DU separated network architecture, before the target base station sends the first message to the target relay terminal, it also includes: the CU-CP of the target base station needs to pass between CU-CP and CU-UP. The interface (such as E1 interface) sends a bearer context establishment request (BEARER CONTEXT SETUP REQUEST) message to the CU-UP serving the target relay terminal. The bearer context establishment request message includes at least one of the following information:
identification of the target relay terminal;
configuration information of the second bearer;
terminal identification;
configuration information of the third bearer;

The second bearer is an end-to-end bearer between the terminal and the target base station, and the third bearer is a Uu interface bearer between the target relay terminal and the target base station.

If the target base station uses a CU/DU separated network architecture, before the target base station sends the first message to the target relay terminal, it also includes: the CU-CP of the target base station needs to pass the CU-CP and the target DU (that is, the CU-CP serving the target relay terminal). The interface (F1 interface) between DUs sends an F1 UE context setup request (F1 UE CONTEXT Setup REQUEST) message to the target DU, where the F1 UE context setup request message includes at least one of the following information:
identification of the target relay terminal;
terminal identification;
association between the target relay terminal and the source relay terminal.
S5: The target relay terminal replies to the target base station with the first response message corresponding to the first message;
If the target relay terminal can provide relay services for the terminal, the target relay terminal replies to the target base station with a first response message corresponding to the first message.

Optionally, the first response message may include terminal identification allocated by the target relay terminal to the terminal for use in the relay-related adaptation layer after the terminal accesses the target relay terminal. The first response message may be an RRC reconfiguration complete message.

S6: The target base station sends a handover request acknowledgement message to the source base station;
after receiving the first response message corresponding to the first message sent by the target relay terminal, the target base station needs to reply to the source base station with a handover request acknowledgement message. The handover request acknowledgement message includes at least one of the following information:
identification of the target relay terminal;
configuration information of the first bearer;
configuration information of the second bearer;
a first mapping relationship between the first bearer and the second bearer;
terminal identification, which is allocated to the terminal by the target relay terminal or allocated to the terminal by the target base station;

The first bearer is a direct communication interface bearer between the terminal and the target relay terminal, and the second bearer is an end-to-end bearer between the terminal and the target base station.

S7: The source base station sends an RRC reconfiguration message to the terminal;
Here, the source base station sends an RRC reconfiguration message to the terminal, triggering the terminal to initiate the handover process. The RRC reconfiguration message carries the identification of the target relay terminal. The identification of the target relay terminal may be the target address of the target relay terminal on the direct communication interface or the identification of the relay UE broadcast by the target relay terminal in the relay discovery message.

In addition, it should be noted that if the source base station uses a CU/DU separated network architecture, the source base station also needs to use the interface between CU-CP and CU-UP (such as the E1 interface) to communicate with the CU- The UP sends a bearer context release (BEARER CONTEXT RELEASE) message, which at least includes the identification of the terminal. The identification of the terminal here can be the C-RNTI of the terminal under the source base station.

If the source base station adopts a CU/DU separated network architecture, the source base station also needs to send an F1 UE context release request (F1 UE CONTEXT) to the DU of the source base station serving the terminal through the interface between CU-CP and DU (such as the F1 interface). RELEASE REQUEST) message, the F1 UE context release request message includes at least one of the following information:
terminal identification of the terminal;
identification of the source relay terminal corresponding to the terminal.
S8: The terminal establishes a direct communication connection with the target relay terminal;
S9: the terminal sends a RRC reconfiguration completion message to the target base station through the target relay terminal.

Through this step, the terminal completes the relay connection establishment process under the target base station, and can use the relay connection for subsequent UL/DL data transmission.

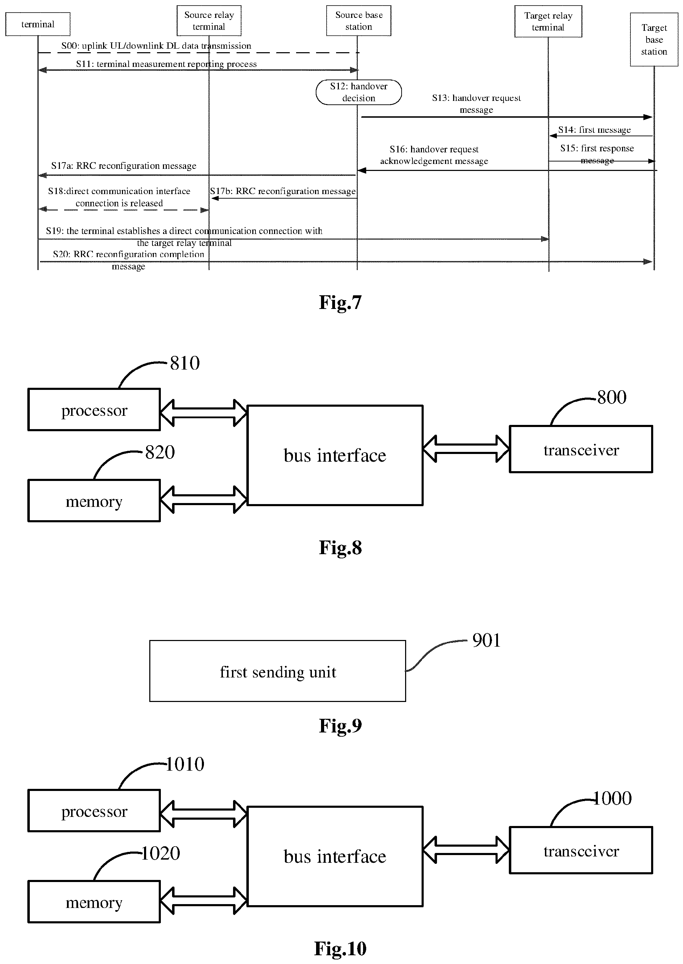

Embodiment 2: the terminal performs a handover from the indirect connection under the source network device to the indirect connection under the target network device, as shown in Fig. 7.

In this embodiment, the source network device is the source base station, and the target network device is the target base station. Among them, the specific description of each step is as follows:
S00: The terminal and the source base station perform uplink UL/downlink DL data transmission;
S11: Terminal measurement reporting process;

The terminal performs the measurement process according to the configuration of the source base station. When the measurement reporting triggering conditions are met, the terminal reports the measurement results to the source base station.

It should be noted that the terminal performs the measurement process according to the configuration of the source base station. During the measurement process, it obtains a relay discovery message. The relay discovery message carries the identification of the target relay terminal and adds the target relay discovery message to the target relay terminal. The identification of the relay terminal is reported to the source base station.

S12: The source base station executes handover decision;
How the source base station performs the handover decision depends on the source base station implementation. If the source base station determines that the terminal needs to be switched to the target relay terminal of the target network device, step S 13 is executed.

S13: The source base station sends a handover request message to the target base station;
The source base station performs a handover decision on the terminal. If it is judged that the terminal needs to be handed over to the target relay terminal of the target network device, the source base station sends a handover request message to the target base station through the interbase station interface (for 5G, the interface is the Xn interface). The handover request message needs to carry at least identification of the target relay terminal.

S14: The target base station sends the first message to the target relay terminal;
After receiving the handover request message, the target base station needs to send a first message to the target relay terminal. The first message includes at least one of the following information:
identification of the target relay terminal;
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship between the first bearer, the second bearer and the third bearer;

Among them, the first bearer is the direct communication interface bearer between the terminal and the target relay terminal, the second bearer is the end-to-end bearer between the terminal and the target base station, and the third bearer is the Uu interface bearer between the target relay terminal and the target base station.

Specifically, the first message may be an RRC reconfiguration message.

In addition, it should be noted that if the target base station uses a CU/DU separated network architecture, before the target base station sends the first message to the target relay terminal, it also includes: the CU-CP of the target base station needs to pass between CU-CP and CU-UP. The interface (such as E1 interface) sends a bearer context establishment request (BEARER CONTEXT SETUP REQUEST) message to the CU-UP serving the target relay terminal. The bearer context establishment request message includes at least one of the following information:
identification of the target relay terminal;
configuration information of the second bearer;
terminal identification;
configuration information of the third bearer;

The second bearer is an end-to-end bearer between the terminal and the target base station, and the third bearer is a Uu interface bearer between the target relay terminal and the target base station.

If the target base station uses a CU/DU separated network architecture, before the target base station sends the first message to the target relay terminal, it also includes: the CU-CP of the target base station needs to pass the CU-CP and the target DU (that is, the CU-CP serving the target relay terminal). The interface (F1 interface) between DUs sends an F1 UE context setup request (F1 UE CONTEXT Setup REQUEST) message to the target DU, where the F1 UE context setup request message includes at least one of the following information:
identification of the target relay terminal;
terminal identification;
association between the target relay terminal and the source relay terminal.

S15: The target relay terminal replies to the target base station with the first response message corresponding to the first message;
If the target relay terminal can provide relay services for the terminal, the target relay terminal replies to the target base station with a first response message corresponding to the first message.

Optionally, the first response message may include terminal identification allocated by the target relay terminal to the terminal for use in the relay-related adaptation layer after the terminal accesses the target relay terminal. The first response message may be an RRC reconfiguration complete message.

S16: The target base station sends a handover request acknowledgement message to the source base station;
After receiving the first response message corresponding to the first message sent by the target relay terminal, the target base station needs to reply to the source base station with a handover request acknowledgement message. The handover request acknowledgement message includes at least one of the following information:
The identification of the target relay terminal;
configuration information of the first bearer;
configuration information of the second bearer;
a first mapping relationship between the first bearer and the second bearer;
terminal identification, which is allocated to the terminal by the target relay terminal or allocated to the terminal by the target base station;

The first bearer is a direct communication interface bearer between the terminal and the target relay terminal, and the second bearer is an end-to-end bearer between the terminal and the target base station.

S17a: The source base station sends an RRC reconfiguration message to the terminal;
Here, the source base station sends an RRC reconfiguration message to the terminal, triggering the terminal to initiate the handover process. The RRC reconfiguration message carries the identification of the target relay terminal. The identification of the target relay terminal may be the target address of the target relay terminal on the direct communication interface or the identification of the relay UE broadcast by the target relay terminal in the relay discovery message.

S 17b: The source base station sends an RRC reconfiguration message to the source relay terminal;
Here, the source base station sends an RRC reconfiguration message to the source relay terminal, triggering the source relay terminal to perform at least one of the following steps:
releasing a direct communication interface connection with the first terminal;
releasing a backhaul link bearer of a Uu interface related only to the first terminal; or
modifying a backhaul link bearer of a Uu interface related to the first terminal.

In addition, it should be noted that if the source base station uses a CU/DU separated network architecture, the source base station also needs to use the interface between CU-CP and CU-UP (such as the E1 interface) to communicate with the CU- The UP sends a bearer context release (BEARER CONTEXT RELEASE) message, which at least includes the identification of the terminal. The identification of the terminal here can be the C-RNTI of the terminal under the source base station.

If the source base station adopts a CU/DU separated network architecture, the source base station also needs to send an F1 UE context release request (F1 UE CONTEXT) to the DU of the source base station serving the terminal through the interface between CU-CP and DU (such as the F1 interface). RELEASE REQUEST) message, the F1 UE context release request message includes at least one of the following information:
terminal identification of the terminal;
identification of the source relay terminal corresponding to the terminal.
S18: The direct communication interface connection between the terminal and the source relay terminal is released;
Here, the PC5 RRC connection is released between the terminal and the source relay terminal.

Here, this step may be triggered by the terminal or by the source relay terminal.

S19: The terminal establishes a direct communication connection with the target relay terminal;
S20: The terminal sends a RRC reconfiguration completion message to the target base station through the target relay terminal.

Through this step, the terminal completes the relay connection establishment process under the target base station, and can use the relay connection for subsequent UL/DL data transmission.

As shown in Fig. 8, an embodiment of the present disclosure also provides a network device. The network device is a source network device, including: a memory 820, a transceiver 800, and a processor 810: the memory 820 is configured to store computer programs; the transceiver 800, configured to send and receive data under the control of the processor 710; the processor 810, configured to read the computer program in the memory 820 and perform the following operations:
sending a handover request message for a first terminal to a target network device through an interface between network devices, where the handover request message includes identifications of target relay terminals of the target network device.

In FIG. 8, the bus architecture may include any number of interconnected buses and bridges, specifically one or more processors represented by processors 8 to 10 and various circuits of the memory represented by memories 8 to 20 linked together. The bus architecture can also link together various other circuits such as peripherals, voltage regulators, and power management circuits, which are all well known in the art and therefore will not be described further herein. The bus interface provides the interface. The transceiver 8 00 may be a plurality of elements, including a transmitter and a receiver, providing a unit for communicating with various other devices over transmission media, including wireless channels, wired channels, optical cables, and other transmission media. The processor 8 10 is responsible for managing the bus architecture and general processing, and the memory 8 20 can store data used by the processor 8 10 when performing operations.

The processor 8-10 may be a central processing unit (Central Processing Unit, CPU), an application specific integrated circuit (Application Specific Integrated Circuit, ASIC), a field programmable gate array (Field - Programmable Gate Array, FPGA) or a complex programmable Logic device (Complex Programmable Logic Device, CPLD), the processor can also adopt a multi-core architecture.

Optionally, the transceiver 700 is further configured to perform:
receiving a handover request acknowledgement message sent by the target network device, where the handover request acknowledgement message includes at least one of the following information:
an identification of a target relay terminal;
configuration information of a first bearer;
configuration information of a second bearer;
a first mapping relationship between the first bearer and the second bearer; or
a terminal identification, where the terminal identification is allocated by the target relay terminal to the first terminal, or is allocated by the target network device to the first terminal;
where the first bearer is a direct communication interface bearer between the first terminal and the target relay terminal, and the second bearer is an end-to-end bearer between the first terminal and the target network device.

Optionally, the handover request acknowledgement message is sent by the target network device after receiving a first response message sent by the target relay terminal, and the first response message is configured to indicate that the target relay terminal is able to provide relay services for the first terminal.

Optionally, the terminal identification is used in a relay-related adaptation layer after a terminal accesses the target relay terminal.

Optionally, the transceiver 800 is further configured to perform:
sending a first radio resource control (RRC) reconfiguration message to the first terminal, where the first RRC reconfiguration message is configured to trigger the first terminal to initiate a handover process, and the first RRC reconfiguration message carries the identification of the target relay terminal.

Optionally, the transceiver 800 is further configured to perform:
when the first terminal is connected to a source relay terminal, sending a second RRC reconfiguration message to the source relay terminal, where the second RRC reconfiguration message triggers the source relay terminal to perform at least one of the following:
releasing a direct communication interface connection with the first terminal;
releasing a backhaul link bearer of a Uu interface related only to the first terminal; or
modifying a backhaul link bearer of a Uu interface related to the first terminal.

Optionally, a centralized unit-control plane (CU-CP) of the source network device sends, through an interface between the CU-CP and a centralized unit-user plane (CU-UP), a bearer context release message to the centralized unit-user plane of the source network device serving the first terminal, where the bearer context release message includes terminal identification of the first terminal.

Optionally, a CU-CP of the source network device sends, through an interface between the CU-CP and a Distribute Unit (DU), a terminal context release message to the DU of the source network device serving the first terminal, where the terminal context release message includes at least one of the following information:
terminal identification of the first terminal;
identification of a source relay terminal corresponding to the first terminal.

In the embodiment of the present disclosure, a handover request message for the first terminal is sent to the target network device through the interface between the network devices, where the handover request message includes identification of the target relay terminal in the target network device. Therefore, the terminal can directly perform a handover to the target relay terminal of the target network device, thereby better ensuring continuity of the service.

As shown in Fig. 9, the embodiments of the present disclosure further provides a handover apparatus, including:
a first sending unit 901, configured to send a handover request message for a first terminal to a target network device through an interface between network devices; where the handover request message includes identifications of target relay terminals of the target network device.

Optionally, the handover device further includes:
a first receiving unit, configured to receive a handover request acknowledgement message sent by the target network device, where the handover request acknowledgement message includes at least one of the following information:
an identification of a target relay terminal;
configuration information of a first bearer;
configuration information of a second bearer;
a first mapping relationship between the first bearer and the second bearer; or
a terminal identification, where the terminal identification is allocated by the target relay terminal to the first terminal, or is allocated by the target network device to the first terminal;
where the first bearer is a direct communication interface bearer between the first terminal and the target relay terminal, and the second bearer is an end-to-end bearer between the first terminal and the target network device.

Optionally, the handover request acknowledgement message is sent by the target network device after receiving a first response message sent by the target relay terminal, and the first response message is configured to indicate that the target relay terminal is able to provide relay services for the first terminal.

Optionally, the terminal identification is used in a relay-related adaptation layer after a terminal accesses the target relay terminal.

Optionally, the handover device further includes:
a second sending unit, configured to send a first radio resource control (RRC) reconfiguration message to the first terminal, where the first RRC reconfiguration message is configured to trigger the first terminal to initiate a handover process, and the first RRC reconfiguration message carries the identification of the target relay terminal.

Optionally, the handover device further includes:
a third sending unit, configured to, when the first terminal is connected to a source relay terminal, send a second RRC reconfiguration message to the source relay terminal, where the second RRC reconfiguration message triggers the source relay terminal to perform at least one of the following:
releasing a direct communication interface connection with the first terminal;
releasing a backhaul link bearer of a Uu interface related only to the first terminal; or
modifying a backhaul link bearer of a Uu interface related to the first terminal.

Optionally, a centralized unit-control plane (CU-CP) of the source network device sends, through an interface between the CU-CP and a centralized unit-user plane (CU-UP), a bearer context release message to the centralized unit-user plane of the source network device serving the first terminal, where the bearer context release message includes terminal identification of the first terminal.

Optionally, a CU-CP of the source network device sends, through an interface between the CU-CP and a Distribute Unit (DU), a terminal context release message to the DU of the source network device serving the first terminal, where the terminal context release message includes at least one of the following information:
terminal identification of the first terminal;
identification of a source relay terminal corresponding to the first terminal.

In the embodiment of the present disclosure, a handover request message for the first terminal is sent to the target network device through the interface between the network devices, where the handover request message includes identification of the target relay terminal in the target network device. Therefore, the terminal can directly perform a handover to the target relay terminal of the target network device, thereby better ensuring continuity of the service.

It should be noted that the division of units in the embodiment of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on this understanding, the technical solution of the present disclosure is essentially or contributes to the relevant technology, or all or part of the technical solution can be embodied in the form of a software product, and the computer software product is stored in a storage medium, It includes several instructions to cause a computer device (which can be a personal computer, a server, or a network device, etc.) or a processor to execute all or part of the steps of the methods described in various embodiments of the present disclosure. The aforementioned storage media include: U disk, mobile hard disk, Read-Only Memory (ROM), Random Access Memory (RAM), magnetic disk or optical disk and other media that can store program code.

It should be noted here that the above-mentioned device provided by the embodiment of the present disclosure can implement all the method steps implemented by the above-mentioned method embodiment, and can achieve the same technical effect. The same as the method embodiment in this embodiment will no longer be used. The parts and beneficial effects will be described in detail.

In some embodiments of the present disclosure, a processor-readable storage medium is also provided, the processor-readable storage medium stores program instructions, and the program instructions are configured to cause the processor to perform the following steps:
sending a handover request message for a first terminal to a target network device through an interface between network devices; where the handover request message includes identifications of target relay terminals of the target network device.

When the program is executed by the processor, it can implement all the implementation methods in the above method embodiments applied to the network device side as shown in Fig. 1. To avoid duplication, they will not be described again here.

As shown in Fig. 10, an embodiment of the present disclosure also provides a network device. The network device is a target network device, including: a memory 1020, a transceiver 1000, a processor 1010: a memory 1020 for storing computer programs; a transceiver 1000, configured to send and receive data under the control of the processor 1010; the processor 1010, configured to read the computer program in the memory 1020 and perform the following operations:
receiving a handover request message for a first terminal sent by a source network device, through an interface between network devices, where the handover request message includes identifications of target relay terminals of the target network device.

A handover request message directed to the first terminal sent by the source network device is received through an interface between network devices, where the switching request message includes identification of the target relay terminal of the target network device.

In FIG. 10, the bus architecture may include any number of interconnected buses and bridges, specifically one or more processors represented by processors 1010 and various circuits of the memory represented by memories 1020 linked together. The bus architecture can also link together various other circuits such as peripherals, voltage regulators, and power management circuits, which are all well known in the art and therefore will not be described further herein. The bus interface provides the interface. The transceiver 1000 may be a plurality of components, including a transmitter and a receiver, providing a unit for communicating with various other devices over transmission media, including wireless channels, wired channels, optical cables, and other transmission media. The processor 1010 is responsible for managing the bus architecture and general processing, and the memory 1020 may store data used by the processor 1010 when performing operations.

The processor 10 may be a central processing unit (Central Processing Unit, CPU), an application specific integrated circuit (Application Specific Integrated Circuit, ASIC), a field programmable gate array (Field - Programmable Gate Array, FPGA) or a complex programmable Logic device (Complex Programmable Logic Device, CPLD), the processor can also adopt a multi-core architecture.

Optionally, the transceiver 1000 is further configured to perform:
sending a first message to the target relay terminal, where the first message includes at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
where the first bearer is a direct communication interface bearer between the first terminal and the target relay terminal, and the second bearer is an end-to-end bearer between the first terminal and the target network device, and the third bearer is a Uu interface bearer between the target relay terminal and the target network device.

Optionally, the transceiver 1000 is further configured to perform:
receiving a first response message corresponding to the first message sent by the target relay terminal, where the first response message is configured to indicate that the target relay terminal is able to provide relay services for the first terminal.

Optionally, the first response message includes terminal identification allocated by the target relay terminal to the first terminal.

Optionally, the transceiver 1000 is further configured to perform:
sending to a handover request acknowledgement message to the source network device, where the handover request acknowledgement message includes at least one of the following information:
an identification of the target relay terminal;
configuration information of a first bearer;
configuration information of a second bearer;
a first mapping relationship between the first bearer and the second bearer; or
a terminal identification, where the terminal identification is allocated by the target relay terminal to the first terminal, or is allocated by the target network device to the first terminal;
where the first bearer is a direct communication interface bearer between the first terminal and the target relay terminal, and the second bearer is an end-to-end bearer between the first terminal and the target network device.

Optionally, the terminal identification is used in a relay-related adaptation layer after a terminal accesses the target relay terminal.

Optionally, a centralized unit-control plane (CU-CP) of the target network device sends, the bearer context establishment request message to the centralized unit-user plane of the target network device serving the target relay terminal through an interface between the CU-CP and a centralized unit-user plane (CU-UP),
where the bearer context establishment request message includes at least one of the following information:
identifications of the target relay terminals;
configuration information of the second bearer;
a terminal identification of the first terminal;
configuration information of the third bearer;
where the second bearer is an end-to-end bearer between the first terminal and the target network device, and the third bearer is a Uu interface bearer between the target relay terminal and the target network device.

Optionally, a centralized unit-control plane (CU-CP) of the target network device sends, a terminal context establishment request message to a distribution unit (DU) of the target network device through an interface between the CU-CP and the DU, where the terminal context establishment request message includes at least one of the following information:
identification of the target relay terminal;
terminal identification of the first terminal;
an association relationship between the target relay terminal and the source relay terminal.

According to the handover apparatus in the present disclosure, a handover request message for the first terminal sent by the source network device is received through the interface between the network devices, where the handover request message includes identification of the target relay terminal in the target network device. Therefore, it can be ensured that the terminal can directly perform a handover to the target relay terminal of the target network device, and better ensure the continuity of the service.

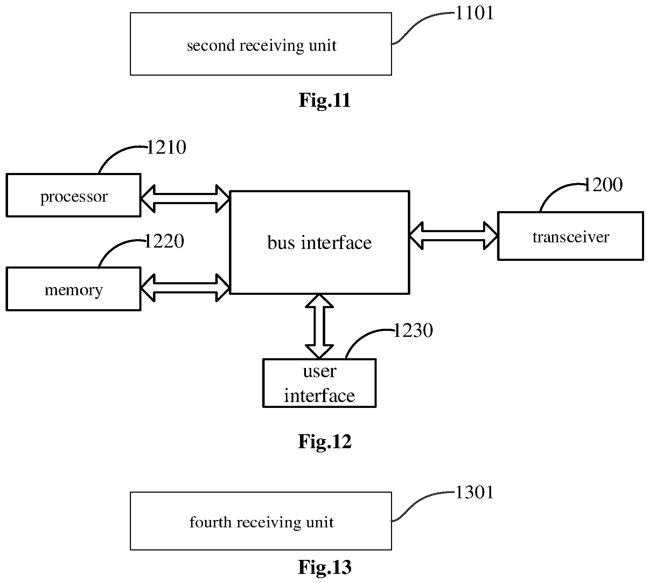

As shown in Fig. 11, the embodiments of the present disclosure also provides a handover device, including:
a second receiving unit 1101, configured to, receive a handover request message for a first terminal sent by a source network device, through an interface between network devices, where the handover request message includes identifications of target relay terminals of the target network device.

Optionally, the handover device further includes:
a fourth sending unit configured to send a first message to the target relay terminal, where the first message includes at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
where the first bearer is a direct communication interface bearer between the first terminal and the target relay terminal, and the second bearer is an end-to-end bearer between the first terminal and the target network device, and the third bearer is a Uu interface bearer between the target relay terminal and the target network device.

Optionally, the handover device further includes:
a third receiving unit configured to receive a first response message corresponding to the first message sent by the target relay terminal, where the first response message is configured to indicate that the target relay terminal is able to provide relay services for the first terminal.

Optionally, the first response message includes terminal identification allocated by the target relay terminal to the first terminal.

Optionally, the handover device further includes:
a fifth sending unit, configured to send to a handover request acknowledgement message to the source network device, where the handover request acknowledgement message includes at least one of the following information:
identification of the target relay terminal;
configuration information of a first bearer;
configuration information of a second bearer;
a first mapping relationship between the first bearer and the second bearer; or
terminal identification, where the terminal identification is allocated by the target relay terminal to the first terminal, or is allocated by the target network device to the first terminal;
where the first bearer is a direct communication interface bearer between the first terminal and the target relay terminal, and the second bearer is an end-to-end bearer between the first terminal and the target network device.

Optionally, the terminal identification is used in a relay-related adaptation layer after a terminal accesses the target relay terminal.

Optionally, a centralized unit-control plane (CU-CP) of the target network device sends, the bearer context establishment request message to the centralized unit-user plane of the target network device serving the target relay terminal through an interface between the CU-CP and a centralized unit-user plane (CU-UP),
where the bearer context establishment request message includes at least one of the following information:
identification of the target relay terminal;
configuration information of the second bearer;
terminal identification of the first terminal;
configuration information of the third bearer;
where the second bearer is an end-to-end bearer between the first terminal and the target network device, and the third bearer is a Uu interface bearer between the target relay terminal and the target network device.

Optionally, a centralized unit-control plane (CU-CP) of the target network device sends, a terminal context establishment request message to a distribution unit (DU) of the target network device through an interface between the CU-CP and the DU, where the terminal context establishment request message includes at least one of the following information:
identification of the target relay terminal;
terminal identification of the first terminal;
an association relationship between the target relay terminal and the source relay terminal.

According to the handover apparatus in the present disclosure, a handover request message for the first terminal sent by the source network device is received through the interface between network devices, where the handover request message includes identification of the target relay terminal in the target network device. Therefore, it can be ensured that the terminal can directly perform a handover to the target relay terminal of the target network device, and better ensure the continuity of the service.

It should be noted that the division of units in the embodiment of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on this understanding, the technical solution of the present disclosure is essentially or contributes to the relevant technology, or all or part of the technical solution can be embodied in the form of a software product, and the computer software product is stored in a storage medium, It includes several instructions to cause a computer device (which can be a personal computer, a server, or a network device, etc.) or a processor to execute all or part of the steps of the methods described in various embodiments of the present disclosure. The aforementioned storage media include: U disk, mobile hard disk, Read-Only Memory (ROM), Random Access Memory (RAM), magnetic disk or optical disk and other media that can store program code.

It should be noted here that the above-mentioned device provided by the embodiment of the present disclosure can implement all the method steps implemented by the above-mentioned method embodiment, and can achieve the same technical effect. The same as the method embodiment in this embodiment will no longer be used. The parts and beneficial effects will be described in detail.

In some embodiments of the present disclosure, a processor-readable storage medium is also provided, the processor-readable storage medium stores program instructions, and the program instructions are configured to cause the processor to perform the following steps:
receiving a handover request message for a first terminal sent by a source network device, through an interface between network devices, where the handover request message includes identification of a target relay terminal of the target network device.

When the program is executed by the processor, it can implement all the implementation methods in the above method embodiment applied to the network device side as shown in Fig. 4. To avoid duplication, they will not be described again here.

As shown in Fig. 12, an embodiment of the present disclosure also provides a relay terminal. The relay terminal is a target relay terminal under a target network device, including: a memory 1220, a transceiver 1200, a processor 1210: a memory 1220, configured to store program instructions; transceiver 1200, configured to send and receive data under the control of the processor 1210; processor 1210, configured to read the program instructions in the memory 1220, configured to perform the following operations:
receiving, through the transceiver 1200, a first message sent by a target network device, where the first message is sent by the target network device after receiving a handover request message for the first terminal sent by a source network device, where the handover request message includes identifications of target relay terminals, and the first message includes at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
where the first bearer is a direct communication interface bearer between the first terminal and the target relay terminal, and the second bearer is an end-to-end bearer between the first terminal and the target network device, and the third bearer is a Uu interface bearer between the target relay terminal and the target network device.

In FIG. 12, the bus architecture may include any number of interconnected buses and bridges, specifically one or more processors represented by processor 1210 and various circuits of the memory represented by memory 1220 are linked together. The bus architecture can also link together various other circuits such as peripherals, voltage regulators, and power management circuits, which are all well known in the art and therefore will not be described further herein. The bus interface provides the interface. The transceiver 1200 may be a plurality of elements, including a transmitter and a receiver, providing a unit for communicating with various other devices over transmission media, including wireless channels, wired channels, optical cables, etc. Transmission medium. For different user equipment, the user interface 1230 can also be an interface capable of externally connecting internal and external required equipment. The connected equipment includes but is not limited to a keypad, a display, a speaker, a microphone, a joystick, etc.

The processor 1210 is responsible for managing the bus architecture and general processing, and the memory 1220 can store data used by the processor 1210 when performing operations.

Optionally, the processor 1210 may be a central processing unit (Central Processing Unit, CPU), an application specific integrated circuit (Application Specific Integrated Circuit, ASIC), a field programmable gate array (Field-Programmable Gate Array, FPGA) or Complex Programmable Logic Device (CPLD), the processor 1210 can also adopt a multi-core architecture.

The processor 1210 is configured to execute any of the methods provided by the embodiments of the present disclosure according to the obtained executable instructions by calling the program instructions stored in the memory. The processor 1210 and the memory 1220 may also be physically arranged separately.

Optionally, the transceiver 1200 is further configured to:
sending a first response message to the target network device, where the first response message is configured to indicate that the target relay terminal is able to provide relay services for the first terminal.

The relay terminal in the embodiment of the present disclosure receives the first message sent by the target network device. The first message is sent by the target network device after receiving the handover request message for the first terminal sent by the source network device, the handover request message includes identification of the target relay terminal, and the first message includes at least one of the following information: configuration information of the first bearer; configuration information of the third bearer; a first mapping relationship between first bearer and the second bearer; the second mapping relationship between the first bearer and the third bearer; the third mapping relationship between the second bearer and the third bearer; a fourth mapping relationship among the first bearer, the second bearer and the third bearer; where the first bearer is the direct communication interface bearer between the first terminal and the target relay terminal, and the second bearer is the direct communication interface bearer between the first terminal and the target relay terminal. The end-to-end bearer between the target network devices, and the third bearer is the Uu interface bearer between the target relay terminal and the target network device. In this way, it can be ensured that the terminal can directly perform a handover to the target relay terminal of the target network device, thereby better ensuring continuity of the service.

As shown in Fig. 13, an embodiment of the present disclosure also provides a handover device, including:
a fourth receiving unit 1301, configured to receive a first message sent by a target network device, where the first message is sent by the target network device after receiving a handover request message for the first terminal sent by a source network device, where the handover request message includes identifications of target relay terminals, and the first message includes at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
where the first bearer is a direct communication interface bearer between the first terminal and the target relay terminal, and the second bearer is an end-to-end bearer between the first terminal and the target network device, and the third bearer is a Uu interface bearer between the target relay terminal and the target network device.

Optionally, the handover device in this embodiment of the present disclosure further includes:
a sixth sending unit, configured to send a first response message to the target network device, where the first response message is configured to indicate that the target relay terminal is able to provide relay services for the first terminal.
the present disclosure receives the first message sent by the target network device, and the first message is sent by the target network device after receiving the handover request message for the first terminal sent by the source network device, The handover request message includes identification of the target relay terminal, and the first message includes at least one of the following information: configuration information of the first bearer; configuration information of the third bearer; a first mapping relationship between the first bearer and the second bearer; a second mapping relationship between the first bearer and the third bearer; the third mapping relationship between the second bearer and the third bearer; a fourth mapping relationship among the first bearer, the second bearer and the third bearer bearers; where the first bearer is a direct communication interface bearer between the first terminal and the target relay terminal, and the second bearer is a bearer between the first terminal and the target relay terminal. End-to-end bearer between target network devices. The third bearer is the Uu interface bearer between the target relay terminal and the target network device. In this way, it can be ensured that the terminal can directly perform a handover to the target relay terminal of the target network device thereby better ensuring continuity of the service.

It should be noted that the division of units in the embodiment of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on this understanding, the technical solution of the present disclosure is essentially or contributes to the relevant technology, or all or part of the technical solution can be embodied in the form of a software product, and the computer software product is stored in a storage medium, It includes several instructions to cause a computer device (which can be a personal computer, a server, or a network device, etc.) or a processor to execute all or part of the steps of the methods described in various embodiments of the present disclosure. The aforementioned storage media include: U disk, mobile hard disk, Read-Only Memory (ROM), Random Access Memory (RAM), magnetic disk or optical disk and other media that can store program code.

It should be noted here that the above-mentioned device provided by the embodiment of the present disclosure can implement all the method steps implemented by the above-mentioned method embodiment, and can achieve the same technical effect. The same as the method embodiment in this embodiment will no longer be used. The parts and beneficial effects will be described in detail.

In some embodiments of the present disclosure, a processor-readable storage medium is also provided, the processor-readable storage medium stores program instructions, and the program instructions are configured to cause the processor to perform the following steps:
receiving a first message sent by a target network device, where the first message is sent by the target network device after receiving a handover request message for the first terminal sent by a source network device, where the handover request message includes identification of the target relay terminal, and the first message includes at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
where the first bearer is a direct communication interface bearer between the first terminal and the target relay terminal, and the second bearer is an end-to-end bearer between the first terminal and the target network device, and the third bearer is a Uu interface bearer between the target relay terminal and the target network device.

When the program is executed by the processor, it can implement all the implementation methods in the above method embodiment applied to the relay terminal side as shown in Fig. 5. To avoid duplication, they will not be described again here.

The embodiments of the present disclosure can be applied to a variety of systems, especially 5G systems. For example, applicable systems may be Global System of Mobile communication (GSM) system, Code Division Multiple Access (CDMA) system, Wideband Code Division Multiple Access (WCDMA) general packet Wireless service (General Packet Radio Service, GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave Access (WiMAX) system, 5G New Radio, NR) system, etc. These various systems include terminal equipment and network device. The system can also include the core network part, such as the Evolved Packet System (EPS), 5G system (5GS), etc.

The terminal in the present disclosure may be a device that provides voice and/or data connectivity to users, a handheld device with a wireless connection function, or other processing devices connected to a wireless modem, etc. In different systems, the names of terminal equipment may also be different. For example, in a 5G system, the terminal equipment may be called User Equipment (UE). Wireless terminal equipment can communicate with one or more core networks (Core Network, CN) via a Radio Access Network (RAN). The wireless terminal equipment can be a mobile terminal equipment, such as a mobile phone (also known as a "cell phone"). " telephone) and computers with mobile terminal devices, which may be, for example, portable, pocket-sized, handheld, computer-built-in or vehicle-mounted mobile devices, which exchange speech and/or data with the radio access network. For example, Personal Communication Service (PCS) phones, cordless phones, Session Initiated Protocol (SIP) phones, Wireless Local Loop (WLL) stations, Personal Digital Assistants, PDA) and other equipment. Wireless terminal equipment may also be called a system, a subscriber unit, a subscriber station, a mobile station, a mobile station, a remote station, or an access point, remote terminal equipment (remote terminal), access terminal equipment (access terminal), user terminal equipment (user terminal), user agent (user agent), user device (user device), are not limited in the embodiments of the present disclosure.

The base station in the present disclosure may be a base station, and the base station may include multiple cells that provide services for terminals. Depending on the specific application, a base station can also be called an access point, or it can be a device in the access network that communicates with wireless terminal equipment through one or more sectors on the air interface, or it can be named by another name. The network device may be configured to exchange received air frames with Internet Protocol (IP) packets and act as a router between the wireless end device and the rest of the access network, which may include the Internet Protocol (IP) communications network. Network devices also coordinate attribute management of the air interface. For example, the network device involved in the embodiments of the present disclosure may be a network device (Base Transceiver Station, BTS) in Global System for Mobile communications (GSM) or Code Division Multiple Access (CDMA).), it can also be a network device (NodeB) in a Wide-band Code Division Multiple Access (WCDMA), or it can be an evolution in a Long Term Evolution (Long Term Evolution, LTE) system Type network device (evolutional Node B, eNB or e-NodeB), 5G base station (gNB) in 5G network architecture (next generation system), or home evolved base station (Home evolved Node B, HeNB), relay node (relay node), home base station (femto), pico base station (pico), etc, are not limited in the embodiments of the present disclosure. In some network structures, network device may include centralized unit (Centralized Unit, CU) nodes and distributed unit (Distributed Unit, DU) nodes. The centralized unit and distributed unit may also be arranged geographically separately.

Network equipment and terminal equipment can each use one or more antennas for Multi-Input Multi-Output (MIMO) transmission. MIMO transmission can be Single User MIMO (Single User MIMO, SU-MIMO) or Multi-User MIMO. (Multiple User MIMO, MU-MIMO). Depending on the shape and number of root antenna combinations, MIMO transmission can be 2D-MIMO, 3D-MIMO, FD-MIMO or massive-MIMO, or it can be diversity transmission, precoding transmission or beamforming transmission, etc.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-usable storage media (including, but not limited to, magnetic disk storage, optical storage, and the like) having computer-usable program code embodied therein.

The present disclosure is described with reference to flowchart illustrations and/or block views of methods, apparatus (systems), and computer program products according to embodiments of the disclosure. It will be understood that each process and/or block in the flowchart illustrations and/or block views, and combinations of processes and/or blocks in the flowchart illustrations and/or block views, can be implemented by computer-executable instructions. These computer-executable instructions may be provided to a processor of a general purpose computer, special purpose computer, embedded processor, or other programmable data processing device to produce a machine that causes execution by the processor of the computer or other programmable data processing device. The instructions generate means for performing the functions specified in the process or processes of the flowchart diagrams and/or the block or blocks of the block views.

These processor-executable instructions may also be stored in a processor-readable memory that causes a computer or other programmable data processing apparatus to operate in a particular manner, such that the generation of instructions stored in the processor-readable memory includes the manufacture of the instruction means product, the instruction device implements the function specified in one process or multiple processes in the flowchart and/or one block or multiple blocks in the block view.

These processor-executable instructions may also be loaded onto a computer or other programmable data processing device, causing a series of operational steps to be performed on the computer or other programmable device to produce computer-implemented processing, thereby causing the computer or other programmable device to The instructions that are executed provide steps for implementing the functions specified in a process or processes of the flowchart diagrams and/or a block or blocks of the block views.

Obviously, those skilled in the art can make various changes and modifications to the present disclosure without departing from the spirit and scope of the disclosure. In this way, if these modifications and variations of the present disclosure fall within the scope of the claims of the present disclosure and equivalent technologies, the present disclosure is also intended to include these modifications and variations.

## Claims

1. A handover method, comprising:
sending, by a source network device, a handover request message for a first terminal to a target network device through an interface between network devices; wherein the handover request message comprises identifications of target relay terminals of the target network device.

2. The method according to claim 1, wherein subsequent to the sending the handover request message for the first terminal to the target network device, the method further comprises:
receiving a handover request acknowledgement message sent by the target network device, wherein the handover request acknowledgement message comprises at least one of the following information:
an identification of a target relay terminal;
configuration information of a first bearer;
configuration information of a second bearer;
a first mapping relationship between the first bearer and the second bearer; or
a terminal identification, wherein the terminal identification is allocated by the target relay terminal to the first terminal, or is allocated by the target network device to the first terminal;
wherein the first bearer is a direct communication interface bearer between the first terminal and the target relay terminal, and the second bearer is an end-to-end bearer between the first terminal and the target network device.

3. The method according to claim 2, wherein the handover request acknowledgement message is sent by the target network device after receiving a first response message sent by the target relay terminal, and the first response message is configured to indicate that the target relay terminal is able to provide relay services for the first terminal.

4. The method according to claim 2, wherein the terminal identification is used in a relay-related adaptation layer after a terminal accesses the target relay terminal.

5. The method according to claim 2, wherein subsequent to the receiving the handover request acknowledgement message sent by the target network device, the method further comprises:
sending a first radio resource control (RRC) reconfiguration message to the first terminal, wherein the first RRC reconfiguration message is configured to trigger the first terminal to initiate a handover process, and the first RRC reconfiguration message carries the identification of the target relay terminal.

6. The method according to claim 2, wherein subsequent to the receiving the handover request acknowledgement message sent by the target network device, the method further comprises:
when the first terminal is connected to a source relay terminal, sending a second RRC reconfiguration message to the source relay terminal, wherein the second RRC reconfiguration message triggers the source relay terminal to perform at least one of the following:
releasing a direct communication interface connection with the first terminal;
releasing a backhaul link bearer of a Uu interface related only to the first terminal; or
modifying a backhaul link bearer of a Uu interface related to the first terminal.

7. The method according to claim 5, further comprising:
sending, by a centralized unit-control plane (CU-CP) of the source network device, through an interface between the CU-CP and a centralized unit-user plane (CU-UP), a bearer context release message to the centralized unit-user plane of the source network device serving the first terminal, wherein the bearer context release message comprises terminal identification of the first terminal.

8. The method according to claim 5, further comprising:
sending, by a CU-CP of the source network device, through an interface between the CU-CP and a Distribute Unit (DU), a terminal context release message to the DU of the source network device serving the first terminal, wherein the terminal context release message comprises at least one of the following information:
a terminal identification of the first terminal;
an identification of a source relay terminal corresponding to the first terminal.

9. A handover method, comprising:
receiving, by a target network device, a handover request message for a first terminal sent by a source network device, through an interface between network devices, wherein the handover request message comprises identifications of target relay terminals of the target network device.

10. The method according to claim 9, wherein subsequent to the receiving the handover request message for the first terminal sent by the source network device, the method further comprises:
sending a first message to the target relay terminals, wherein the first message comprises at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
wherein the first bearer is a direct communication interface bearer between the first terminal and the target relay terminals, and the second bearer is an end-to-end bearer between the first terminal and the target network device, and the third bearer is a Uu interface bearer between the target relay terminals and the target network device.

11. The method according to claim 10, wherein subsequent to the sending the first message to the target relay terminals, the method further comprises:
receiving a first response message corresponding to the first message sent by a target relay terminal, wherein the first response message is configured to indicate that the target relay terminal is able to provide relay services for the first terminal.

12. The method according to claim 11, wherein the first response message comprises a terminal identification allocated by the target relay terminal to the first terminal.

13. The method according to claim 11, wherein subsequent to the receiving the first response message corresponding to the first message sent by the target relay terminal, the method further comprises:
sending to a handover request acknowledgement message to the source network device, wherein the handover request acknowledgement message comprises at least one of the following information:
an identification of the target relay terminal;
configuration information of a first bearer;
configuration information of a second bearer;
a first mapping relationship between the first bearer and the second bearer; or
a terminal identification, wherein the terminal identification is allocated by the target relay terminal to the first terminal, or is allocated by the target network device to the first terminal;
wherein the first bearer is a direct communication interface bearer between the first terminal and the target relay terminal, and the second bearer is an end-to-end bearer between the first terminal and the target network device.

14. The method according to claim 12 or 13, wherein the terminal identification is used in a relay-related adaptation layer after a terminal accesses the target relay terminal.

15. The method according to claim 10, wherein prior to the sending the first message to the target relay terminals, the method further comprises:
sending, by a centralized unit-control plane (CU-CP) of the target network device, the bearer context establishment request message to the centralized unit-user plane of the target network device serving the target relay terminals through an interface between the CU-CP and a centralized unit-user plane (CU-UP),
wherein the bearer context establishment request message comprises at least one of the following information:
identifications of the target relay terminals;
configuration information of the second bearer;
a terminal identification of the first terminal;
configuration information of the third bearer;
wherein the second bearer is an end-to-end bearer between the first terminal and the target network device, and the third bearer is a Uu interface bearer between the target relay terminals and the target network device.

16. The method according to claim 10, wherein prior to the sending the first message to the target relay terminal, the method further comprises:
sending, by a centralized unit-control plane (CU-CP) of the target network device, a terminal context establishment request message to a distribution unit (DU) of the target network device through an interface between the CU-CP and the DU, wherein the terminal context establishment request message comprises at least one of the following information:
identifications of the target relay terminals;
a terminal identification of the first terminal;
an association relationship between the target relay terminals and the source relay terminal.

17. A handover method, comprises:
receiving, by a target relay terminal, a first message sent by a target network device, wherein the first message is sent by the target network device after receiving a handover request message for the first terminal sent by a source network device, wherein the handover request message comprises identifications of target relay terminals, and the first message comprises at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
wherein the first bearer is a direct communication interface bearer between the first terminal and the target relay terminal, and the second bearer is an end-to-end bearer between the first terminal and the target network device, and the third bearer is a Uu interface bearer between the target relay terminals and the target network device.

18. The method according to claim 17, further comprising:
sending a first response message to the target network device, wherein the first response message is configured to indicate that the target relay terminal is able to provide relay services for the first terminal.

19. A network device, wherein the network device is a source network device and comprises: a memory, a transceiver and a processor: the memory is configured to store program instructions; the transceiver is configured to send and receive data under a control of the processor; the processor is configured to read the program instructions in the memory to perform:
sending a handover request message for a first terminal to a target network device through an interface between network devices, wherein the handover request message comprises identifications of target relay terminals of the target network device.

20. The network device according to claim 19, wherein the transceiver is further configured to perform:
receiving a handover request acknowledgement message sent by the target network device, wherein the handover request acknowledgement message comprises at least one of the following information:
an identification of a target relay terminal;
configuration information of a first bearer;
configuration information of a second bearer;
a first mapping relationship between the first bearer and the second bearer; or
a terminal identification, wherein the terminal identification is allocated by the target relay terminal to the first terminal, or is allocated by the target network device to the first terminal;
wherein the first bearer is a direct communication interface bearer between the first terminal and the target relay terminal, and the second bearer is an end-to-end bearer between the first terminal and the target network device.

21. The network device according to claim 20, wherein the handover request acknowledgement message is sent by the target network device after receiving a first response message sent by the target relay terminal, and the first response message is configured to indicate that the target relay terminal is able to provide relay services for the first terminal.

22. The network device according to claim 20, wherein the terminal identification is used in a relay-related adaptation layer after a terminal accesses the target relay terminal.

23. The network device according to claim 20, wherein the transceiver is further configured to perform:
sending a first radio resource control (RRC) reconfiguration message to the first terminal, wherein the first RRC reconfiguration message is configured to trigger the first terminal to initiate a handover process, and the first RRC reconfiguration message carries the identification of the target relay terminal.

24. The network device according to claim 20, wherein the transceiver is further configured to perform:
when the first terminal is connected to a source relay terminal, sending a second RRC reconfiguration message to the source relay terminal, wherein the second RRC reconfiguration message triggers the source relay terminal to perform at least one of the following:
releasing a direct communication interface connection with the first terminal;
releasing a backhaul link bearer of a Uu interface related only to the first terminal; or
modifying a backhaul link bearer of a Uu interface related to the first terminal.

25. The network device according to claim 23, wherein a centralized unit-control plane (CU-CP) of the source network device sends, through an interface between the CU-CP and a centralized unit-user plane (CU-UP), a bearer context release message to the centralized unit-user plane of the source network device serving the first terminal, wherein the bearer context release message comprises terminal identification of the first terminal.

26. The network device according to claim 23, wherein a CU-CP of the source network device sends, through an interface between the CU-CP and a Distribute Unit (DU), a terminal context release message to the DU of the source network device serving the first terminal, wherein the terminal context release message comprises at least one of the following information:
a terminal identification of the first terminal;
an identification of a source relay terminal corresponding to the first terminal.

27. A handover apparatus, comprising:
a first sending unit, configured to send a handover request message for a first terminal to a target network device through an interface between network devices; wherein the handover request message comprises identifications of target relay terminals of the target network device.

28. The handover apparatus according to claim 27, wherein the handover device further comprises:
a first receiving unit, configured to receive a handover request acknowledgement message sent by the target network device, wherein the handover request acknowledgement message comprises at least one of the following information:
an identification of a target relay terminal;
configuration information of a first bearer;
configuration information of a second bearer;
a first mapping relationship between the first bearer and the second bearer; or
a terminal identification, wherein the terminal identification is allocated by the target relay terminal to the first terminal, or is allocated by the target network device to the first terminal;
wherein the first bearer is a direct communication interface bearer between the first terminal and the target relay terminal, and the second bearer is an end-to-end bearer between the first terminal and the target network device.

29. The handover apparatus according to claim 28, wherein the handover request acknowledgement message is sent by the target network device after receiving a first response message sent by the target relay terminal, and the first response message is configured to indicate that the target relay terminal is able to provide relay services for the first terminal.

30. The handover apparatus according to claim 28, wherein the terminal identification is used in a relay-related adaptation layer after a terminal accesses the target relay terminal.

31. The handover apparatus according to claim 28, wherein the handover device further comprises:
a second sending unit, configured to send a first radio resource control (RRC) reconfiguration message to the first terminal, wherein the first RRC reconfiguration message is configured to trigger the first terminal to initiate a handover process, and the first RRC reconfiguration message carries the identification of the target relay terminal.

32. The handover apparatus according to claim 28, wherein the handover device further comprises:
a third sending unit, configured to, when the first terminal is connected to a source relay terminal, send a second RRC reconfiguration message to the source relay terminal, wherein the second RRC reconfiguration message triggers the source relay terminal to perform at least one of the following:
releasing a direct communication interface connection with the first terminal;
releasing a backhaul link bearer of a Uu interface related only to the first terminal; or
modifying a backhaul link bearer of a Uu interface related to the first terminal.

33. The handover apparatus according to claim 31, wherein a centralized unit-control plane (CU-CP) of the source network device sends, through an interface between the CU-CP and a centralized unit-user plane (CU-UP), a bearer context release message to the centralized unit-user plane of the source network device serving the first terminal, wherein the bearer context release message comprises terminal identification of the first terminal.

34. The handover apparatus according to claim 31, wherein a CU-CP of the source network device sends, through an interface between the CU-CP and a Distribute Unit (DU), a terminal context release message to the DU of the source network device serving the first terminal, wherein the terminal context release message comprises at least one of the following information:
a terminal identification of the first terminal;
an identification of a source relay terminal corresponding to the first terminal.

35. A network device, wherein the network device is a target network device and comprises: a memory, a transceiver and a processor: the memory is configured to store program instructions; the transceiver is configured to send and receive data under a control of the processor; the processor is configured to read the program instructions in the memory to perform:
receiving a handover request message for a first terminal sent by a source network device, through an interface between network devices, wherein the handover request message comprises identifications of target relay terminals of the target network device.

36. The network device according to claim 35, wherein the transceiver is further configured to perform:
sending a first message to the target relay terminals, wherein the first message comprises at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
wherein the first bearer is a direct communication interface bearer between the first terminal and the target relay terminals, and the second bearer is an end-to-end bearer between the first terminal and the target network device, and the third bearer is a Uu interface bearer between the target relay terminals and the target network device.

37. The network device according to claim 36, wherein the transceiver is further configured to perform:
receiving a first response message corresponding to the first message sent by a target relay terminal, wherein the first response message is configured to indicate that the target relay terminal is able to provide relay services for the first terminal.

38. The network device according to claim 37, wherein the first response message comprises a terminal identification allocated by the target relay terminal to the first terminal.

39. The network device according to claim 37, wherein the transceiver is further configured to perform:
sending to a handover request acknowledgement message to the source network device, wherein the handover request acknowledgement message comprises at least one of the following information:
an identification of the target relay terminal;
configuration information of a first bearer;
configuration information of a second bearer;
a first mapping relationship between the first bearer and the second bearer; or
a terminal identification, wherein the terminal identification is allocated by the target relay terminal to the first terminal, or is allocated by the target network device to the first terminal;
wherein the first bearer is a direct communication interface bearer between the first terminal and the target relay terminal, and the second bearer is an end-to-end bearer between the first terminal and the target network device.

40. The network device according to claim 38 or 39, wherein the terminal identification is used in a relay-related adaptation layer after a terminal accesses the target relay terminal.

41. The network device according to claim 36, wherein a centralized unit-control plane (CU-CP) of the target network device sends, the bearer context establishment request message to the centralized unit-user plane of the target network device serving the target relay terminals through an interface between the CU-CP and a centralized unit-user plane (CU-UP),
wherein the bearer context establishment request message comprises at least one of the following information:
identifications of target relay terminals;
configuration information of the second bearer;
a terminal identification of the first terminals;
configuration information of the third bearer;
wherein the second bearer is an end-to-end bearer between the first terminal and the target network device, and the third bearer is a Uu interface bearer between the target relay terminals and the target network device.

42. The network device according to claim 36, wherein a centralized unit-control plane (CU-CP) of the target network device sends, a terminal context establishment request message to a distribution unit (DU) of the target network device through an interface between the CU-CP and the DU, wherein the terminal context establishment request message comprises at least one of the following information:
identifications of the target relay terminals;
a terminal identification of the first terminal;
an association relationship between the target relay terminals and the source relay terminal.

43. A handover apparatus, comprises:
a second receiving unit is configured to, receive a handover request message for a first terminal sent by a source network device, through an interface between network devices, wherein the handover request message comprises identifications of target relay terminals of the target network device.

44. The handover apparatus according to claim 43, wherein the handover device further comprises:
a fourth sending unit configured to send a first message to the target relay terminals, wherein the first message comprises at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
wherein the first bearer is a direct communication interface bearer between the first terminal and the target relay terminals, and the second bearer is an end-to-end bearer between the first terminal and the target network device, and the third bearer is a Uu interface bearer between the target relay terminals and the target network device.

45. The handover apparatus according to claim 44, wherein the handover device further comprises:
a third receiving unit configured to receive a first response message corresponding to the first message sent by a target relay terminal, wherein the first response message is configured to indicate that the target relay terminal is able to provide relay services for the first terminal.

46. The handover apparatus according to claim 45, wherein the first response message comprises a terminal identification allocated by the target relay terminal to the first terminal.

47. The handover apparatus according to claim 45, wherein the handover device further comprises:
a fifth sending unit, configured to send to a handover request acknowledgement message to the source network device, wherein the handover request acknowledgement message comprises at least one of the following information:
an identification of the target relay terminal;
configuration information of a first bearer;
configuration information of a second bearer;
a first mapping relationship between the first bearer and the second bearer; or
a terminal identification, wherein the terminal identification is allocated by the target relay terminal to the first terminal, or is allocated by the target network device to the first terminal;
wherein the first bearer is a direct communication interface bearer between the first terminal and the target relay terminal, and the second bearer is an end-to-end bearer between the first terminal and the target network device.

48. The handover apparatus according to claim 46 or 47, wherein the terminal identification is used in a relay-related adaptation layer after a terminal accesses the target relay terminal.

49. The handover apparatus according to claim 44, wherein a centralized unit-control plane (CU-CP) of the target network device sends, the bearer context establishment request message to the centralized unit-user plane of the target network device serving the target relay terminals through an interface between the CU-CP and a centralized unit-user plane (CU-UP),
wherein the bearer context establishment request message comprises at least one of the following information:
identifications of the target relay terminals;
configuration information of the second bearer;
a terminal identification of the first terminal;
configuration information of the third bearer;
wherein the second bearer is an end-to-end bearer between the first terminal and the target network device, and the third bearer is a Uu interface bearer between the target relay terminals and the target network device.

50. The handover apparatus according to claim 44, wherein a centralized unit-control plane (CU-CP) of the target network device sends, a terminal context establishment request message to a distribution unit (DU) of the target network device through an interface between the CU-CP and the DU, wherein the terminal context establishment request message comprises at least one of the following information:
identifications of the target relay terminals;
a terminal identification of the first terminal;
an association relationship between the target relay terminals and the source relay terminal.

51. A relay terminal, wherein the relay terminal is a target relay terminal of a target network device, comprising: a memory, a transceiver and a processor: the memory is configured to store program instructions; the transceiver is configured to send and receive data under a control of the processor; the processor is configured to read the program instructions in the memory to perform:
receiving, through the transceiver, a first message sent by a target network device, wherein the first message is sent by the target network device after receiving a handover request message for the first terminal sent by a source network device, wherein the handover request message comprises identifications of target relay terminals, and the first message comprises at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
wherein the first bearer is a direct communication interface bearer between the first terminal and the target relay terminal, and the second bearer is an end-to-end bearer between the first terminal and the target network device, and the third bearer is a Uu interface bearer between the target relay terminals and the target network device.

52. The relay terminal according to claim 51, wherein the transceiver is further configured to perform:
sending a first response message to the target network device, wherein the first response message is configured to indicate that the target relay terminal is able to provide relay services for the first terminal.

53. A handover apparatus, including:
a fourth receiving unit, configured to receive a first message sent by a target network device, wherein the first message is sent by the target network device after receiving a handover request message for the first terminal sent by a source network device, wherein the handover request message comprises identifications of target relay terminals, and the first message comprises at least one of the following information:
configuration information of the first bearer;
configuration information of the third bearer;
a first mapping relationship between the first bearer and the second bearer;
a second mapping relationship between the first bearer and the third bearer;
a third mapping relationship between the second bearer and the third bearer;
a fourth mapping relationship among the first bearer, the second bearer and the third bearer;
wherein the first bearer is a direct communication interface bearer between the first terminal and the target relay terminal, and the second bearer is an end-to-end bearer between the first terminal and the target network device, and the third bearer is a Uu interface bearer between the target relay terminals and the target network device.

54. The handover apparatus according to claim 53, wherein the handover device further comprises:
a sixth sending unit, configured to send a first response message to the target network device, wherein the first response message is configured to indicate that the target relay terminal is able to provide relay services for the first terminal.

55. A processor-readable storage medium, wherein the processor-readable storage medium stores a computer program, the computer program is configured to enable the processor to execute the steps of the handover method according to any one of claims 1 to 8, or perform the steps of the handover method according to any one of claims 9 to 16, or perform the steps of the handover method according to any one of claims 17 to 18.
